# EUROPEAN PATENT SPECIFICATION

(11) **EP 0 569 941 B1**
(45) Date of publication and mention of the grant of the patent: **01.07.1998**
(21) Application number: 93107658.2
(22) Date of filing: 11.05.1993
(51) Int. Cl.: A23L 1/313, A23L 1/231

(54) **A process for the production of meat broth and meat extract**
Verfahren zur Herstellung von Fleischbrühe und Fleischextrakt
Procédé pour la production de bouillon et d'extrait de viande

(30) Priority: 15.05.1992 DE 4216078
(43) Date of publication of application: 18.11.1993
(73) Proprietor: CPC INTERNATIONAL INC., Englewood Cliffs New Jersey 07632-9976 (US)
(72) Inventor: Stute, Rolf, Dr., D-71686 Remseck (DE); Seuss, Ingrid, Dr., D-36093 Künzell (DE)
(74) Representative: Lederer, Franz, Dr.

(56) References cited:
- EP-A- 0 064 104
- EP-A- 0 244 157
- SCHORMÜLLER J. 'lehrbuch der lebensmittelchemie' 1974 , SPRINGER-VERLAG , BERLIN-HEIDERBERG-NEW YORK * page 327, paragraph 3 - page 328, line 20 *

## Description

The subject matter of the invention relates to a process for the production of meat broth by aqueous extraction of preferably finely comminuted beef and for the production of a meat extract by concentration of the meat broth.

Meat broth is an extract preferably of comminuted meat, obtained by cooking in water, which is cooked with about an equal amount of water and separated again after a short cooking time. Meat which is placed in cold water and slowly heated makes an especially good meat broth. (H.J. Teuteberg in Lebensmittelqualität: Wissenschaft und Technik, VCH-Verlag (1989), page 30).

Meat extract is an aqueous, dark-brown aromatic meat essence concentrated to a paste and contains the water-soluble meat ingredients. (Dr. Oetker Lexikon Lebensmittel und Ernährung, Ceres-Verlag (1989); M. Klünder, Die Herstellung des Liebigschen Fleischextraktes, Chem. Zeitung, Vol. 44 (1920), No. 135, page 837-838).

Up to now, meat extract has been produced in an almost unchanged manner according to the property pattern as given by Liebig and represents a raw material largely standardized with respect to taste and composition. In the past, the production of meat extract represented an essential contribution to utilizing the enormous meat surplus in South America, since non-perishable and thus transportable products could be produced. After the introduction of deep-freeze or refrigerated transports, the meat extract production has lost importance as a preserving method. Today, meat extract is a by-product incorporating various meat broths and meat juices which are produced during meat processing.

In spite of these advances, the methods for producing meat extracts are substantially similar and generally correspond to the conditions given by Liebig, even though numerous technical improvements, such as improved evaporators, have been introduced for the production of meat extracts. The reason for comparatively minor changes in the production process, are most likely due to the quality criteria, which were accurately determined at a very early stage. Both taste and composition (minimum meat content and creatinine, among other things) have been standardized for a long time and therefore had to be adhered to even when technology was changed or modificiations were made to raw materials. As a result, meat extracts produced by various methods differ only slightly from one another. Additionally, meat extracts having alternate properties have never been produced, due to the availability of reaction flavors resulting from the Maillard reaction. These reaction flavors are characterized by tastes or flavors similar to meats or meat extracts. Such flavors are produced by reacting protein hydrolyzates with reactive carbohydrates and, by optionally adding additional combinations of taste-supplying or taste modifying ingredients. Very often, additional meat extract is used as an additional ingredient, since meat extract represents a reaction flavor due to its composition and production.

When the initial meat broth is concentrated or condensed, the reducing sugars contained therein react with the free amino acids, thereby developing the dark-brown color typical of meat extracts and a taste and flavor more characteristic of meat extract than of meat broth. Meat extract, introduced in this form as a seasoning at the end of the last century, has become a seasoning which exhibits a characteristic taste pattern, and which is currently produced at a standardized quality level.

Due to the present trend towards natural products by avoiding chemical reactions in the production of flavors, meat extracts have once again gained importance. Additionally, there is interest in the production of meat extracts having property patterns other than the conventional or standard pattern.

EP-A-244 157 discloses the extraction of actin and myosin from meat using a brine solution containing salt at between 3% and 18% by weight, whereby the temperature is maintained below 30°C to prevent the proteins denaturating.

EP-A-64 104 is concerned with a soluble meat protein product produced from any meat muscle, which process requires that the muscle protein is treated in a saline solution to dissolve meat protein in the solution and at least a part of the water content is removed to obtain soluble material that is still capable of gelling when heated in solution. The maximum temperature reached by the material for any significant period during processing should be limited to less than 35°C-40°C, and preferrably is not allowed to rise substantially above 25-30°C other than momentarily.

Therefore, both in EP-A-244 157 and in EP-A-64 104 a highly molecular, soluble protein with water binding and gel forming properties is obtained, however, no meat broth with particular taste properties like in the present invention.

Previously, not much importance was attached to the time at which meat was processed after slaughter. It is common practice to process meat a period of time after slaughtering, since freshly slaughtered meat becomes tough when cooked and roasted. Therefore, it is common practice in the industry to allow the meat to mature before processing. This allows the initial muscular rigidity to disappear under the influence of meat-inherent enzymes, due to gradual relaxation of the structure. Furthermore, fresh meat is much more resilient than matured meat and therefore harder to comminute.

It has now been found, surprisingly, that meat broth made directly after slaughtering from warm, freshly slaughtered pre-rigor meat and concentrate produced therefrom have a completely different property pattern than previous meat extracts and distinguish particularly themselves by a much higher 5-inosine monophosphate (IMP) content.

The 5-inosine monophosphate is a nucleotide which is contained in the meat as a decomposition product of adenosin triphosphate (ATP). The 5-inosine monophosphate has a taste-enhancing effect and thus represents an essential component of meat flavor.

Therefore, the subject matter of the present invention relates to a process for the production of meat broth by aqueous extraction by cooking in water preferably finely comminuted beef, characterized in that the meat is processed in the pre-rigor condition.

Rigor mortis occurs from about 2 to about 6 hours after slaughtering. Various factors, both in and out of the slaughtered animal, especially temperature, determines the time required for rigor mortis to set in. The more glycogen the muscle contains at the time of slaughter, the later rigor mortis occurs and vice versa. The glycolysis resulting in rigor mortis can be identified by the continuous decrease in the pH value of the meat due to lactic acid accumulation. While freshly slaughtered meat has a pH value of about 7, the value drops to about 5.5 during glycolysis.

According to the present invention, the meat should be processed as rapidly as possible in a warm, freshly slaughtered condition and generally not later than 5 hours, preferably not later than 3 hours, post mortem. According to another criterion the meat to be processed should generally have a pH value of at least 6.0, preferably at least 6.25.

The extraction process is conventional and needs not be described in more detail herein.

The amount of water used for the extraction is not critical and may be determined according to generally known criteria. Usually, water is present in the amount of 1 to 4 times the quantity of meat. The amount of water used will also be dependent upon whether the resulting meat broth is to be used directly or is to be concentrated for the production of a meat extract after the extraction. A certain amount of common salt, in general from 1.5 to 2.0% by weight, can be added to the extraction water before or during cooking of the meat. The meat broth can be concentrated by any known manner, such as in a thin-layer evaporator, and the concentration can be carried out such that the dry matter content is from 70 to 80%.

Meat broths or concentrates produced according to the invention have a considerably higher IMP content than conventional products and therefore exhibit different taste properties. According to the invention it is possible to obtain a meat extract having a 5-inosine monophosphate content of at least 1.5, and preferably at least 2.5% by weight (based on a dry matter content of 73%).

Meat broths or meat extracts obtained according to the present invention have the following essential advantages:
1. a 5'-IMP content, on the average, about 3 times higher than conventional meat broths or extracts;
2. a markedly lower content of reducing sugars (on the average about half as much); and
3. a markedly lower lactate content (between about 30 to about 50% lower).

The following additional advantages are obtained by the invention.
1. Due to the higher 5'-IMP content, the taste of meat broths or meat extracts prepared in accordance with the present invention is intensified. Particularly, an increase in the taste-enhancing effects is noticed when used in combination with other ingredients.
2. The broth or meat extracts of the present invention can be used in an especially effective manner in combination with glutamate, and permits a reduction of the glutamate content in recipes due to the known synergistic effect between glutamate and 5'-nucleotides. This is of particular importance to those people which exhibit a susceptibility to glutamate (Chinese restaurant syndrome) which, although not very frequent, occurs in a number of people.
3. Due to the lower concentration of reducing sugars a tendency towards browning is reduced during the concentration and/or drying steps.

In addition, the use of warm, freshly slaughtered meat also has a number of advantages with respect to meat reprocessing, since,
1. warm, freshly slaughtered meat can be boned more easily (less force required when cut up).
2. Cutting up the meat in a warm, freshly slaughtered condition results in higher meat yields (no loss due to dripping juice) and a higher yield due to better boning.
3. Cutting up the meat in a warm, freshly slaughtered condition enables minimization of germs.
4. Energy-consuming cooling particularly the cooling of fat and bonesafter slaughtering is no longer necessary.

The following examples further illustrate this invention, but are not limitative of the invention, in any manner whatsoever.

### Example 1

Warm, freshly slaughtered beef, from the neck (2 kg) was put through the meat mincer (3 mm perforated disk) about 30 minutes post mortem, admixed with 4 l of water, heated to 85°C and kept at constant temperature for 1 hour. The resulting broth had a dry matter content (DM) of 1.0%^{*}, a 5'-inosine monophosphate content (IMP) of 340⁺µ g/ml broth or 3.4%, based on DM, and a lactate content of 1.14 g/l. The broth was seasoned by adding 0.75 g of common salt. It had an intense, almost penetrating broth taste considered partially sweet.
Note:
* without NaCl addition pre-rigor with NaCl addition = 1.75% post-rigor with NaCl addition = 1.80%
+ average value resulting from 5 tests

In analogy to the meat extract production, the resulting broth was concentrated in a rotary evaporator to a dry matter content of 73%. The resulting concentrate (meat extract) had an IMP content of 3.3% d.s. After redilution, the taste corresponded approximately to fresh, pre-rigor broth.

### Comparative Test 1

A meat broth was made from matured beef, from the neck (14 days post mortem, at 15°C for 24 hours, then 0°C) under the same conditions as described in Example 1. The resulting broth had an DM content of 1.05%^{*} and an IMP content of 95⁺µ g/ml of broth or 0.9%, based on DM, and a lactate content of 1.7 g/l.

The taste was like that of a conventional meat broth. After concentration in the rotary evaporator, a concentrate resulted which largely corresponds to commercial meat extract with respect to its taste properties.

Example 1 shows that broths or concentrates (meat extracts) made from warm, freshly slaughtered (pre-rigor) meat have an IMP content about 3 to 4 times as high and correspondingly different taste properties.

### Example 2

Meat broths were made from various parts of a front beef quarter in the same way as described in Example 1 and Comparative Example 1.

The following table shows that

| part | | 5'-IMP content [µg/ml] |
|---|---|---|
| shoulder | a | 362 |
| | b | 81 |
| brisket | a | 373^{*} |
| | b | 10 |
| prime rib | a | 232 |
| | b | 17 |
| flat rib | a | 330 |
| | b | 45 |
| part of top rib | a | 303^{*} |
| | b | 7 |
| shin | a | 248^{*} |
| | b | 4 |
| a = warm, freshly slaughtered 1.5 h p.m. b = matured 2 weeks p.m. | | |

the IMP contents differ widely in the individual muscles, however, are increased by a factor ranging between 4 and 56 times when warm, freshly slaughtered meat is used.

### Example 3

Broths were made from various muscles in the same manner as described in Example 2, at periods of 4 hours, 24 hours and 2 weeks post mortem each.

The results are set forth in Table 2, and show that markedly higher IMP contents are obtained up to 24 hours post mortem, however, the differences to the post mortem values are not as great as after 1.5 hours post mortem. Therefore, it can be concluded that the shortest possible period between slaughter and broth production is advantageous.

**Table 2**

| part | | 5'-IMP content [µg/ml] |
|---|---|---|
| neck | 4 h | 320 |
| | 24 h | 250 |
| | 2 weeks | 230 |
| shoulder | 4 h | 280 |
| | 24 h | 250 |
| | 2 weeks | 140 |
| brisket | 4 h | 435 |
| | 24 h | 390 |
| | 2 weeks | 35 |
| prime rib | 4 h | 370 |
| | 24 h | 350 |
| | 2 weeks | 60 |
| flat rib | 4 h | 375 |
| | 24 h | 435 |
| | 2 weeks | 65 |
| part of top rib | 4 h | 480 |
| | 24 h | 375 |
| | 2 weeks | 60 |
| shin | 4 h | 330 |
| | 24 h | 210 |
| | 2 weeks | 15 |

## Claims

1. A process for the production of meat broth by aqueous extraction by cooking in water preferably finely comminuted beef, characterized in that beef is processed in the pre-rigor condition.

2. The process according to claim 1, characterized in that warm, freshly slaughtered meat is processed.

3. The process according to claim 1, characterized in that the meat is processed less than 5 hours, post mortem.

4. The process according to claim 1, characterized in that the meat is processed less than 3 hours, post mortem.

5. The process according to claim 1, characterized in that the meat to be processed has a pH value of at least 6.0.

6. The process according to claim 1, characterized in that the meat to be processed has a pH value of at least 6.25.

7. The process according to claim 1, characterized in that from 1.5 to 2.0% by weight of salt is added to the extraction water.

8. The process according to claim 1, characterized in that the meat broth is concentrated after the extraction to form meat extract.

9. A meat extract having a 5-inosine monophosphate content of at least 1.5%, based on a dry matter content of 73%.

10. A meat extract having a 5-inosine monophosphate content of at least 2.5%, based on a dry matter content of 73%.

## Patentansprüche

1. Verfahren zur Herstellung von Fleischbrühe durch wäßrige Extraktion durch Kochen von vorzugsweise klein zerteiltem Rindfleisch in Wasser, dadurch gekennzeichnet, daß Rindfleisch im Prärigor-Zustand verarbeitet wird.

2. Verfahren nach Anspruch 1, dadurch gekennzeichnet, daß schlachtwarmes Fleisch verarbeitet wird.

3. Verfahren nach Anspruch 1, dadurch gekennzeichnet, daß das Fleisch weniger als 5 Stunden post mortem verarbeitet wird.

4. Verfahren nach Anspruch 1, dadurch gekennzeichnet, daß das Fleisch weniger als 3 Stunden post mortem verarbeitet wird.

5. Verfahren nach Anspruch 1, dadurch gekennzeichnet, daß das zu verarbeitende Fleisch einen pH-Wert von zumindest 6,0 aufweist.

6. Verfahren nach Anspruch 1, dadurch gekennzeichnet, daß das zu verarbeitende Fleisch einen pH-Wert von zumindest 6,25 aufweist.

7. Verfahren nach Anspruch 1, dadurch gekennzeichnet, daß dem Extraktionswasser 1,5 bis 2,0 Gew.-% Salz zugegeben werden.

8. Verfahren nach Anspruch 1, dadurch gekennzeichnet, daß die Fleischbrühe nach der Extraktion zu Fleischextrakt konzentriert wird.

9. Fleischextrakt mit einem 5-Inosinmonophosphat-Gehalt von zumindest 1,5%, bezogen auf einen Trockensubstanz-Gehalt von 73 %.

10. Fleischextrakt mit einem 5-Inosinmonophosphat-Gehalt von zumindest 2,5%, bezogen auf einen Trockensubstanz-Gehalt von 73 %.

## Revendications

1. Procédé de production de bouillon de viande par extraction aqueuse en faisant cuire dans de l'eau du boeuf de préférence finement découpé en morceaux, caractérisé en ce que le boeuf est préparé dans un état de pré-rigidité.

2. Procédé selon la revendication 1, caractérisé en ce qu'on prépare la viande fraîchement abattue, chaude.

3. Procédé selon la revendication 1, caractérisé en ce qu'on prépare la viande moins de 5 heures après la mort.

4. Procédé selon la revendication 1, caractérisé en ce qu'on prépare la viande moins de 3 heures après la mort.

5. Procédé selon la revendication 1, caractérisé en ce que la viande à préparer a un pH d'une valeur au moins égale à 6,0.

6. Procédé selon la revendication 1, caractérisé en ce que la viande à préparer a un pH d'une valeur au moins égale à 6,25.

7. Procédé selon la revendication 1, caractérisé en ce qu'on ajoute à l'eau d'extraction entre 1,5 % et 2,0 % en poids de sel.

8. Procédé selon la revendication 1, caractérisé en ce qu'on concentre le bouillon de viande après l'extraction, ce qui forme un extrait de viande.

9. Extrait de viande ayant une teneur en 5-inosine monophosphate au moins égale à 1,5 %, compte-tenu d'une teneur en matière sèche de 73 %.

10. Extrait de viande ayant une teneur en 5-inosine monophosphate au moins égale à 2,5 %, compte-tenu d'une teneur en matière sèche de 73 %.
